# EUROPEAN PATENT SPECIFICATION

(11) **EP 0 546 289 B1**
(45) Date of publication and mention of the grant of the patent: **20.11.1996**
(21) Application number: 92117911.5
(22) Date of filing: 20.10.1992
(51) Int. Cl.: B60R 13/02, B29C 45/00, B29C 45/17

(54) **Process for the manufacture of trim panels for motor-vehicles**
Verfahren zum Herstellen von Bekleidungsplatten für Kraftfahrzeuge
Procédé pour fabriquer des panneaux de revêtement pour véhicules automobiles

(30) Priority: 10.12.1991 IT MI913301
(43) Date of publication of application: 16.06.1993
(73) Proprietor: COMMER S.p.A., 20063 Cernusco sul naviglio Milano (IT)
(72) Inventor: Vecchiarino, Luigi, I-20069 Vaprio d'Adda (Milan) (IT)
(74) Representative: Marietti, Giuseppe

(56) References cited:
- EP-A- 0 290 399
- DE-A- 3 410 216
- DE-A- 3 808 727
- DE-U- 8 522 207
- FR-A- 2 413 205
- GB-A- 2 116 902
- US-A- 4 968 474

## Description

The present invention relates to a process for the manufacture of trim panels for motorvehicles and to a mold for performing such a production as described in EP-A-0290399.

Many types of processes are known for the manufacture of trim panels for interiors of motorvehicles. Generally, said processes envisage to produce first of all the base portion of the panel and then to apply additional elements thereon such as door handles and pockets, that are prepared by separate operation.

Furthermore, methods are known envisaging to directly obtain a base portion provided with areas covered with a fabric to improve the general appearance of the panel.

Said solution, which allows to avoid the subsequent application of small panels covered with fabric, has been described, with different features, in several patent applications in the name of the present applicant.

The object of the present invention is to propose a process that enables the manufacture of trim panels with a reduced number of operations and therefore reduced manufacturing costs.

Said object is obtained by means of the present invention that relates to a process for the manufacture of trim panels for interiors of motorvehicles as defined in claim 1.

A further object of the present invention is a mold for carrying out a process of the afore described type, characterized in that it comprises half-molds provided with projecting portions in contact with each other when the mold is closed, at least in correspondence to the portions of panel presenting an undercut in the finished panel.

A further object of the present invention consists in panels obtained with the claimed process in claim 8 and in the panel semifinished elements according to claim 10. An embodiment of the

invention will be now described in a more detailed way with reference to the accompanying drawings given by illustrative and non limiting purposes, where:
- figure 1 is a side sectional view of a mold to be used in the process according to the invention;
- figure 2 is a partial view of the transverse section of the mold of figure 1;
- figure 3 is a side sectional view of a partially formed panel;
- figure 4 is a side sectional view of a finished panel;
- figure 5 is a perspective view of a panel such as that in figure 4; and
- fig. 6 is a side sectional view of a further embodiment of a panel according to the invention.

It is hereby specified that the term " trim panel" and "panel for interiors" as used herein means, besides the panels for doors, any type of element for motorvehicles internal trimming such as dashboard, heel-posts, hat shelves, and so on.

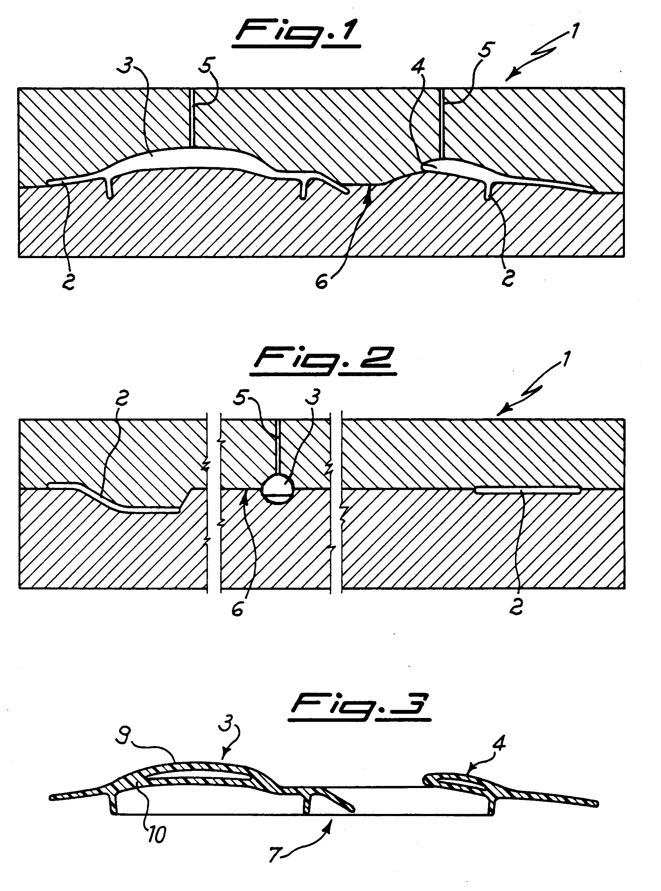

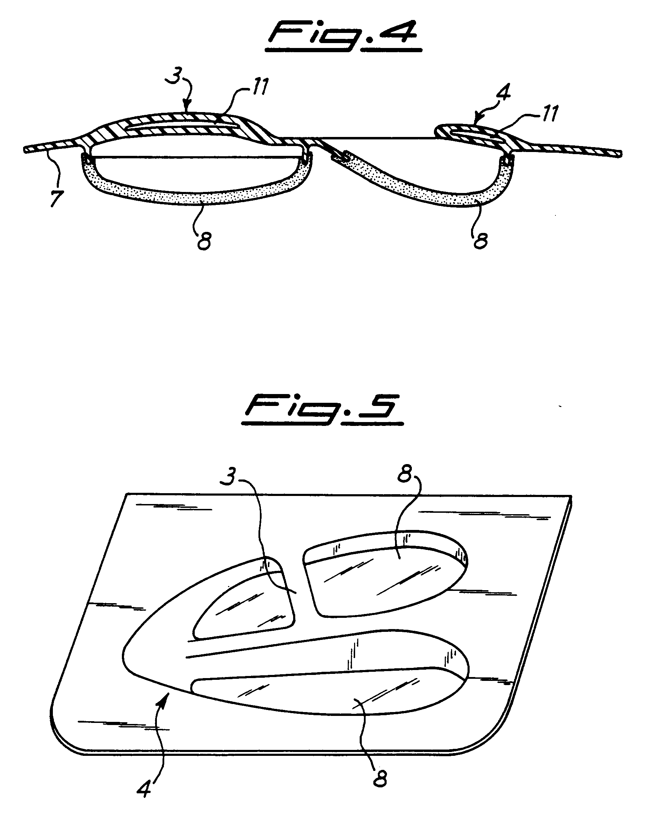

Figure 1 shows in side section a mold suitable to be used for the method according to the invention, and reference thereto will be initially made to describe said process.

As previously mentioned, the process according to the invention envisages first of all to form in the mold 1 a partial structure of panel by simultaneously injecting a material for external coating, i.e. the so called imitation leather of the panel, and a material for internal support that is preferably consisting of polypropylene with sawdust filler, known in the art under the name of Woodstock.

Preferably the material of external coating, too, is of the polypropylene type. By heaving the same kind of inner and auter material, recycling of the panel once the car is disposed of, will be much easier. Examples of materials suitable to be used are the products EXP 1638/3 for the internal portion and EXP 1/162 for the external one, both produced by HIMONT.

During the injection of said materials into the cavities 2 of the mold 1, a gas is also preferably injected at predetermined locations of the panel. In particular said gas injection is performed in correspondence to the door handle 3 and the panel pocket 4 and in all points such as ribs or the like where the mass is subject to volume variations that may result in shrinkage cavities.

Such gas injection results in empty spaces 11 within the material 10, as disclosed in figures 3, 4 and 6.

Figures 1 and 2, for better clarity of the drawing, schematically represent only channels 5 for gas injection in correspondence to handle and pocket, while channels for thermoplastic injection are not disclosed.

As better shown in figure 2, the mold 1 presents, on the half-molds, portions 6 which are in contact with each other in order to prevent any panel molding in correspondence to said portions 6. These portions are located at least in correspondence to the areas that in the finished panel will be undercut areas, namely at least in correspondence to the door handle 3 and the pocket 4 and in any case where a decorative element is required.

Thus an incomplete panel is obtained, where its base portion 2 is one piece with the handle and the pocket, and which is provided with a plurality of cavities or missing base portions at least in correspondence thereto. The missing base portions have predetermined area and shape, because they have both a technical function, namely to allow the formation of undercut areas (i.e. handle and/or pocket) and a decorative function, namely to form fabric covered areas.

Figure 3 shows a side section of the thus obtained panel semi-finished product, where the imitation leather 9 and the sawdust filled internal material 10 are disclosed.

The missing portions of panel are produced separately, and generally consist of panels 8 preferably consisting of or covered with a material different from the one used for the external coating of the semi-finished product 7. Said panels 8 will have area and shape complementary and substantially corresponding to those of the portions missing on the semi-finished product 7. The term "substantially corresponding" means that panels 8 are provided with flanges or edges allowing their fastening to the semi-finished product 7 for the panel completion. All complementary panels 8 for one semi-finished product 7 may be obtained in a single piece panel 8 (fig. 6).

Preferably, complementary panels 8 will be of the type covered with fabric and will therefore constitute the fabric medals that in the known technique are generally obtained in a single piece with the imitation leather coating.

The technique of simultaneous injection of coating 9 and internal material 10 is known per se, as are known the techniques of localized gas injection during the injection of a thermoplastic material as well as the molding of panels coated with fabric. For example, these latter can be obtained by the injection molding of a thermoplastic support on a coating fabric, as described in the Italian application n. MI91A000257 filed by the Applicant on 01 February, 1991.

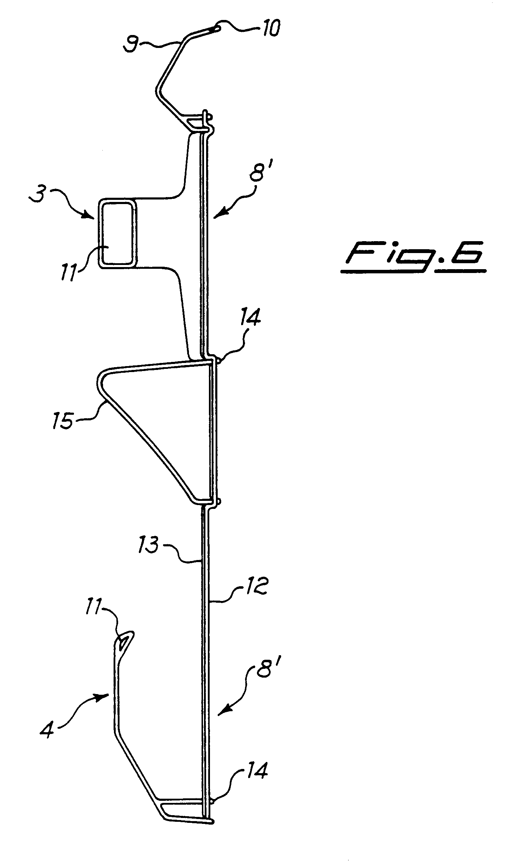

After fastening complementary panels 8 to the semi-finished product 7, the finished panel schematically shown in figures 4, 5 and 6 is obtained .

Fig. 6 discloses a further embodiment of a trim panel according to the invention. In this embodiment, besides pocket 4 and handle 11, there is also an armrest 15. In this case missing base portions are obtained from a single complementary panel 8' consisting of a supporting element 12 and a cover element, e.g. made of fabric, 13, provided on the front face of panel 8'. Complementary panel 8' is secured to semi-finished panel 7 by securing means 14 such as screws at any suitable means known in the art.

The economical and esthetic advantages of the process according to the invention are evident. In fact, it is possible to obtain door handles and pockets in a single piece with the panel, thus avoiding their separate production and their subsequent fastening to the panel by means of screws. Furthermore, the separate manufacture of one or several panels 8 allows to obtain in the finished panel the so-called "shadow effect", usually given by the presence of a fabric panel separate from the bottom panel, otherwise very hardly obtainable.

## Claims

1. A process for manufacturing trim panels for interiors of motorvehicles, comprising the injection molding of a first panel portion (2) with missing base portions having predetermined area and shape,
separately preparing one or more complementary panel portions (8) having area and shape substantially corresponding to those of said missing base portions; and fastening said complementary panel portions to said first panel, characterized in that said first panel portion is obtained by coinjection moulding of an internal support material and a coating material to form a base panel having an internal supporting material (10) surrounded by a coating material (9).

2. A process according to claim 1, wherein said first panel portion is one-piece with handle and/or pocket or similar undercut parts said missing base portions are provided in correspondence to said handels (11), pockets (4) or similar undercut parts.

3. A process according to claim 1 or 2, wherein gas is injected into said supporting material of said first panel portion in correspondence to said door handles (11) and/or pockets (4) and/or ribs or other parts of the panel subject to volume variations upon cooling of said panel material.

4. A process according to claim 1, wherein an external polypropylene coating and an internal polypropylene support comprising sawdust filler are simultaneously injected.

5. A process according to claim 1, wherein said complementary panels are comprising a fabric outer cover.

6. A process according to claim 5, wherein said complementary panels (8) are obtained by injection molding of a thermoplastic support on a fabric portion.

7. A mold to perform a process according to one of the claims 1 to 6, characterized in that it comprises half-molds provided with portions (6) in contact with each other when the mold is closed at least in correspondence to the portions of panel presenting an undercut when the panel is finished.

8. A panel for interiors of motorvehicles, as obtainable by means of a process according to one of claims 1 to 7, characterized in that it comprises a first panel portion (2) provided with missing base portions and with at least a handle (11) and/or a pocket (4) in one-piece with said first portion, and one or more complementary panel portions (8, 8') bound to said first panel portion (2) in correspondence to cited missing base portions, said first panel portion having an internal supporting material (10) surrounded by an outer coating material (9).

9. A panel according to claim 8, wherein said missing base portions are obtained from a single complementary panel (8').

10. A semi-finished product (7) for the production of a panel according to claim 8 or 9, characterized in that it comprises a panel portion one piece with a door handle (11) and/or a pocket (4) or similar undercut parts, and missing base portions having predetermined area and shape, said missing portions being located at least in correspondence to said handles (11) and/or pockets (4) or similar portions of panel presenting undercuts when the panel is finished, and in that it is comprising an internal support material (10) surrounded by a coating material (9).

## Patentansprüche

1. Verfahren zum Herstellen von Verkleidungsplatten für Innenräume von Kraftfahrzeugen, umfassend das Spritzgießen eines ersten Plattenteiles (2) mit fehlenden Grundelementteilen von vorgegebener Fläche und Form;
separates Herstellen eines oder mehrerer Komplementärplattenteile (8) mit einer Fläche und einer Form, die im wesentlichen jenen der fehlenden Grundelementteile entspricht; und
Befestigen der Komplementärplattenteile an der ersten Platte, gekennzeichnet dadurch, daß das erste Plattenteil durch zeitgleiches Spritzgießen eines internen Trägermaterials und eines Beschichtungsmaterials zum Ausbilden einer Grundplatte erhalten wird, die ein internes Trägermaterial (10) besitzt, das von einem Beschichtungsmaterial (9) umgeben wird.

2. Verfahren nach Anspruch 1, bei dem das erste Plattenteil mit einem Griff und/oder einer Tasche oder ähnlichen Hinterschneidungsteilen einstückig ist, wobei die fehlenden Grundelementteile in Entsprechung zu den Griffen (11), Taschen (4) oder ähnlichen Hinterschneidungsteilen vorgesehen sind.

3. Verfahren nach Anspruch 1 oder 2, bei dem in das Trägermaterial des ersten Plattenteiles in Entsprechung zu den Türgriffen (11) und/oder Taschen (4) und/oder Rippen oder anderen Teilen der Platte, die beim Abkühlen des Plattenmaterials Volumenveränderungen unterliegen, Gas injiziert wird.

4. Verfahren nach Anspruch 1, bei dem gleichzeitig eine äußere Polypropylenbeschichtung und eine innere Polypropylenträgerschicht, die Sägemehlfüller enthält, eingespritzt werden.

5. Verfahren nach Anspruch 1, bei dem die Komplementärplatten einen äußeren Gewebeüberzug umfassen.

6. Verfahren nach Anspruch 5, bei dem die Komplementärplatten (8) durch Spritzgießen eines Thermoplastträgers auf ein Gewebeteil erhalten werden.

7. Form zum Ausführen eines Verfahrens gemäß einem der Ansprüche 1 bis 6, gekennzeichnet dadurch, daß sie Halbformen umfaßt, die mit Teilen (6) versehen sind, die, wenn die Form geschlossen ist, einander mindestens in Entsprechung zu den Teilen der Platte berühren, die eine Hinterschneldung darstellen, wenn die Platte fertiggestellt ist.

8. Platte für Innenräume von Kraftfahrzeugen, die mit Hilfe eines Verfahrens entsprechend einem der Ansprüche 1 bis 7 erhältlich ist, gekennzeichnet dadurch, daß sie ein erstes Plattenteil (2), das einstückig mit dem ersten Teil mit fehlenden Grundelementteilen und mit mindestens einem Griff (11) und/oder einer Tasche (4) versehen ist, und ein oder mehrere Komplementärplattenteile (8, 8') umfaßt, die an dem ersten Plattenteil (2) in Entsprechung zu den erwähnten fehlenden Grundelementteilen verbunden sind, wobei das erste Plattenteil ein internes Trägermaterial (10) besitzt, das von einem Außenbeschichtungsmaterial (9) umgeben wird.

9. Platte nach Anspruch 8, bei der die fehlenden Grundelementteile aus einer einzigen Komplementärplatte (8') erhalten werden.

10. Halbfertiges Produkt (7) zur Herstellung einer Platte entsprechend Anspruch 8 oder 9, gekennzeichnet dadurch, daß es ein mit einem Türgriff (11) und/oder einer Tasche (4) oder ähnlichen Hinterschneidungsteilen einstückiges Plattenteil und fehlende Grundelementteile umfaßt, die eine vorgegebene Fläche und Form besitzen, wobei die fehlenden Teile mindestens in Entsprechung zu den Griffen (11) und/oder den Taschen (4) oder ähnlichen, Hinterschneidungen darstellenden Teilen der Platte angeordnet sind, wenn die Platte fertiggestellt ist, und daß es ein internes Trägermaterial (10) umfaßt, das von einem Beschichtungsmaterial (9) umgeben ist.

## Revendications

1. Procédé pour fabriquer des panneaux d'habillage pour des intérieurs de véhicules automobiles, comprenant le moulage par injection d'une première partie de panneau (2) avec des parties de base manquantes ayant une superficie et une forme prédéterminées,
préparant séparément une ou plusieurs parties de panneau complémentaires (8) ayant une superficie et une forme correspondant sensiblement à celles desdites parties de base manquantes ; et fixant lesdites parties de panneau complémentaires au premier panneau, caractérisé en ce que ladite première partie de panneau est obtenue par moulage par co-injection d'un matériau de support interne et d'un matériau de revêtement pour constituer un panneau de base ayant un matériau de support interne (10) recouvert par un matériau de revêtement (9).

2. Procédé selon la revendication 1, dans lequel ladite première partie de panneau est constituée d'une seule pièce avec une poignée et/ou une poche ou des parties en contre-dépouille analogues, lesdites parties de base manquantes étant situées en correspondance avec lesdites poignées (11), poches (4) ou parties en contredépouille analogues.

3. Procédé selon les revendications 1 ou 2, dans lequel du gaz est injecté à l'intérieur du matériau de support de ladite première partie de panneau en correspondance avec lesdites poignées de porte (11) et/ou poches (4) et/ou nervures ou autres parties du panneau soumises à des variations de volume lors du refroidissement dudit matériau de panneau.

4. Procédé selon la revendication 1, dans lequel un revêtement externe en polypropylène et un support interne en polypropylène comprenant une matière de remplissage à base de sciure sont injectés simultanément.

5. Procédé selon la revendication 1, dans lequel lesdits panneaux complémentaires comprennent une enveloppe extérieure en tissu.

6. Procédé selon la revendication 5, dans lequel lesdits panneaux complémentaires (8) sont obtenus par moulage par injection d'un support thermoplastique sur une partie en tissu.

7. Moule pour réaliser un procédé selon l'une des revendications 1 à 6, caractérisé en ce qu'il comprend des demi-moules munis de parties (6) en contact les unes avec les autres lorsque le moule est fermé, au moins en correspondance avec les parties de panneau présentant une contre-dépouille lorsque le panneau est terminé.

8. Panneau pour des intérieurs de véhicules automobiles, tel qu'il est obtenu au moyen d'un procédé selon l'une des revendications 1 à 7, caractérisé en ce qu'il comprend une première partie de panneau (2) pourvue de parties de base manquantes et d'au moins une poignée (11) et/ou une poche (4) d'une seule pièce avec ladite première partie, et une ou plusieurs parties de panneau complémentaires (8, 8') limite ladite première partie de panneau (2), en correspondance avec les parties de base manquantes citées, la première partie de panneau ayant un matériau de support interne (10) recouvert par un matériau de revêtement extérieur (9).

9. Panneau selon la revendication 8, dans lequel lesdites parties de base manquantes sont obtenues à partir d'un seul panneau complémentaire (8').

10. Produit semi-fini (7) pour la fabrication d'un panneau selon la revendication 8 ou 9, caractérisé en ce qu'il comprend une partie de panneau d'une seule pièce avec une poignée de porte (11) et/ou une poche (4) ou des parties en contre-dépouille analogues, et des parties de base manquantes ayant une superficie et une forme prédéterminées, lesdites parties manquantes étant situées au moins en correspondance avec lesdites poignées (11) et/ou poches (4) ou parties analogues de panneau présentant des contre-dépouilles lorsque le panneau est terminé, et en ce qu'il comprend un matériau de support interne (10) recouvert par un matériau de revêtement (9).
